# EUROPEAN PATENT SPECIFICATION

(11) **EP 1 624 261 B1**
(45) Date of publication and mention of the grant of the patent: **17.10.2007**
(21) Application number: 05016314.6
(22) Date of filing: 27.07.2005
(51) Int. Cl.: F25B 27/00

(54) **Engine driven air conditioner and control method therefor**
Motorbetriebene Klimaanlage und Steuerungsverfahren dafür
Conditionneur d'air à moteur à combustion et procédé pour son contrôle

(30) Priority: 28.07.2004 JP 2004220113
(43) Date of publication of application: 08.02.2006
(73) Proprietor: SANYO ELECTRIC CO., LTD., Moriguchi-shi, Osaka (JP)
(72) Inventor: Ohkawa, Kazunobu, Ora-gun Gunma 370-0518 (JP); Hirata, Ryota, Ora-gun Gunma 370-0532 (JP)
(74) Representative: Glawe, Delfs, Moll

(56) References cited:
- EP-A- 1 335 116
- US-A- 2 286 961
- PATENT ABSTRACTS OF JAPAN vol. 017, no. 362 (M-1441), 8 July 1993 (1993-07-08) & JP 05 052445 A (SANYO ELECTRIC CO LTD), 2 March 1993 (1993-03-02)
- PATENT ABSTRACTS OF JAPAN vol. 2000, no. 18, 5 June 2001 (2001-06-05) & JP 01 049861 A (MITSUBISHI ELECTRIC CORP), 27 February 1989 (1989-02-27)
- PATENT ABSTRACTS OF JAPAN vol. 2002, no. 03, 3 April 2002 (2002-04-03) & JP 2001 330341 A (MITSUBISHI HEAVY IND LTD; TOKYO GAS CO LTD), 30 November 2001 (2001-11-30)
- PATENT ABSTRACTS OF JAPAN vol. 1996, no. 12, 26 December 1996 (1996-12-26) & JP 08 200879 A (MITSUBISHI HEAVY IND LTD), 6 August 1996 (1996-08-06)

## Description

### BACKGROUND OF THE INVENTION

### 1. Field of the Invention

The present invention relates to an engine driving type air conditioner equipped with an outdoor unit having a compressor driven by an engine and an outdoor heat exchanger and an indoor unit having an indoor heat exchanger and a method of controlling the air conditioner, and also to detection of a bypass valve provided in a bypass pipe through which a part of refrigerant discharged from the compressor is returned to the suction side of the compressor.

### 2. Description of the Related Art

There has been known a so-called engine driving type air conditioner in which a compressor of an outdoor unit is driven by an engine using gas or the like as fuel to compress and circulate refrigerant. This type of engine driving type air conditioner is equipped with a bypass pipe for returning a part of the refrigerant discharged from the compressor to the suction side of the compressor in some cases. In this case, a bypass valve is provided in the bypass pipe, and the bypass valve is opened to adjust the circulation amount of the refrigerant circulated between the outdoor unit and the indoor unit (for example, JP-A-2001-330341 or US-A-2286961).

However, there is a case where the bypass valve is locked because it bites dust or it is damaged. When the bypass valve is locked, it is impossible to adjust the amount of the refrigerant circulation through the bypass pipe, and particularly when the bypass valve is locked under the state that it is opened (open-locked), the rotational number of the engine is controlled to be set to a higher value than a normal rotational number in order to secure a predetermined refrigerant circulation amount, so that the fuel consumption amount is increased.

### SUMMARY OF THE INVENTION

Therefore, an obj ect of the present invention is to provide an engine driving type air conditioner that can detect the lock of a bypass valve, and a method of controlling the air conditioner.

In order to attain the above object, according to a first aspect of the present invention, an engine driving type air conditioner including an outdoor unit having a compressor driven by an engine and a indoor unit which are connected to each other through a refrigerant pipe, the outdoor unit having a bypass pipe for returning a part of refrigerant discharged from the compressor to the suction side of the compressor and a bypass valve provided in the bypass pipe, is characterized by comprising: a bypass valve abnormality detecting unit for controlling the bypass valve so that the bypass valve is subjected to a valve opening/closing operation when the engine is stopped, detecting the pressure difference of refrigerant between both the entrance and exit sides of the bypass valve in a predetermined time after the bypass valve is subjected to the valve opening/closing operation, and judging on the basis of a detection result concerning the pressure difference whether the bypass valve is locked or not.

According to a second aspect of the present invention, in the above engine driving air conditioner, the bypass valve abnormality detecting unit controls the bypass valve so that the bypass valve is closed when the engine is stopped, detecting the pressure difference of the refrigerant between both the entrance and exit sides of the bypass valve after a predetermined time elapses from the time when the bypass valve is closed, and judging whether the pressure difference concerned is within a predetermined range, thereby judging whether the bypass valve is open-locked or not.

According to a third aspect of the present invention, in the above engine driving type air conditioner, the bypass valve abnormality detecting unit judges whether the bypass valve is open-locked, on the basis of the difference of the pressure difference between both the entrance and exit sides of the bypass valve after the predetermined time elapses and the pressure difference between both the entrance and exit sides of the bypass valve which is detected in advance before the engine is driven.

According to a fourth aspect of the present invention, in the above engine driving type air conditioner, the bypass valve abnormality detecting unit determines a first variation degree of the pressure difference between both the entrance and exit sides of the bypass valve when the engine is stopped and the bypass valve is closed, and a second variation degree of the pressure difference between both the entrance and exit sides of the bypass valve when the bypass valve is opened again after the bypass valve is closed, compares the first and second variation degrees and judges on the basis of the comparison result whether the bypass valve is close-locked or not.

According to a fifth aspect of the present invention, the above engine driving type air conditioner further comprises an alarm unit for alarming the lock of the bypass valve when the bypass valve abnormality detecting unit detects the lock of the bypass valve.

According to a sixth aspect of the present invention, the above engine driving type air conditioner further comprises a storage unit for storing operation data of the engine driving type air conditioner when the bypass valve abnormality detecting unit detects the lock of the bypass valve, and a display unit for displaying the operation data stored in the storage unit.

According to a seventh aspect of the present invention, a method of controlling an engine driving type air conditioner including an outdoor unit having a compressor driven by an engine and a indoor unit which are connected to each other through a refrigerant pipe, the outdoor unit having a bypass pipe for returning a part of refrigerant discharged from the compressor to the suction side of the compressor and a bypass valve provided in the bypass pipe, is characterized by comprising the steps of: controlling the bypass valve so that the bypass valve is subjected to a valve opening/closing operation when the engine is stopped; detecting the pressure difference of refrigerant between both the entrance and exit sides of the bypass valve in a predetermined time after the bypass valve is subjected to the valve opening/closing operation; and judging on the basis of a detection result concerning the pressure difference whether the bypass valve is locked or not.

According to an eighth aspect of the present invention, in the above method, the controlling step comprises a step of closing the bypass valve when the engine is stopped, detecting the pressure difference of the refrigerant between both the entrance and exit sides of the bypass valve after a predetermined time elapses from the time when the bypass valve is closed, and judging whether the pressure difference concerned is within a predetermined range, thereby judging whether the bypass valve is open-locked or not.

According to a ninth aspect of the present invention, in the above method, the judging step comprises a step of determining a first variation degree of the pressure difference between both the entrance and exit sides of the bypass valve when the engine is stopped and the bypass valve is closed, and a second variation degree of the pressure difference between both the entrance and exit sides of the bypass valve when the bypass valve is opened again after the bypass valve is closed, comparing the first and second variation degrees and judging on the basis of the comparison result whether the bypass valve is close-locked or not.

According to a tenth aspect of the present invention, the above method further comprises a step of alarming the lock of the bypass valve when the bypass valve abnormality detecting unit detects the lock of the bypass valve.

According to the present invention, when the engine is stopped, the bypass valve is closed, the pressure difference of the refrigerant between the entrance and exit sides of the bypass valve after a predetermined time elapses is detected, and it is judged whether the pressure difference is within a predetermined range, whereby it is judged whether the bypass valve is open-locked. Therefore, the open-lock state of the bypass valve can be detected with high precision. Furthermore, when the engine is stopped, the bypass valve is closed, and the variation degree of the pressure difference between the entrance and exit sides of the bypass valve is calculated. Thereafter, the bypass valve is opened, the variation degree of the pressure difference between the entrance and exist sides of the bypass valve is calculated, and these variation degrees thus calculated are compared with each other. By judging whether the comparison result is within a predetermined range, it is detected whether the bypass valve is close-locked or not. Therefore, the close-lock state of the bypass valve can be detected with high precision.

### BRIEF DESCRIPTION OF THE DRAWINGS

Fig. 1 is a diagram showing the construction of an engine driving type air conditioner according to an embodiment;
Fig. 2 is a block diagram showing the construction of a control device;
Fig. 3 is a flowchart showing bypass valve abnormality detection processing;
Fig. 4 is a flowchart subsequent to the flowchart of Fig. 3; and
Fig. 5 is a diagram showing the bypass valve abnormality detection processing.

### DETAILED DESCRIPTION OF THE PREFERRED EMBODIMENTS

A preferred embodiment according to the present invention will be described hereunder with reference to the accompanying drawings.

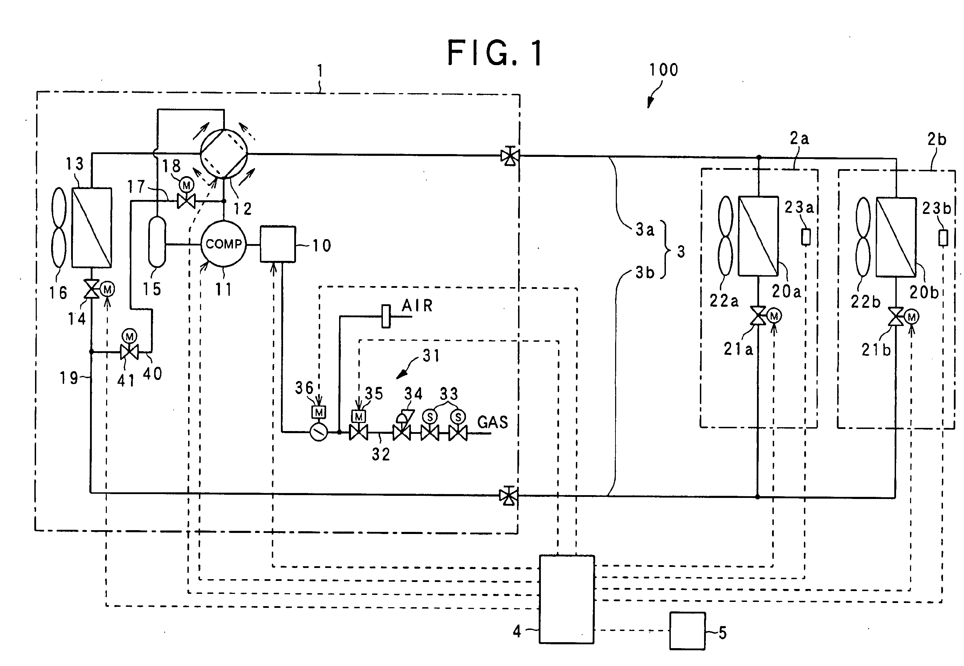

Fig. 1 is a diagram showing the construction of an engine driving type air conditioner 100 according to an embodiment of the present invention. Te engine driving type air conditioner 100 includes an outdoor unit 1, a plurality of (for example, two) indoor units 2a, 2b, and a refrigerant pipe (inter-unit pipe) 3 comprising a gas pipe 3a and a liquid pipe 3b through which the outdoor unit 1 is connected to the indoor units 2a, 2b. Furthermore, the engine driving type air conditioner 100 is equipped with a control device 4 for controlling the driving operation of the air conditioner 100 and an operating unit 5 for carrying out operations such as a driving instruction of the control device 4, etc.

The operating unit 5 includes an operating panel for operating/stopping the indoor units 2a, 2b, etc., and a display panel (display unit) for displaying various settings and the operation state of the indoor units 2a, 2b and the outdoor unit 1. In this embodiment, the engine driving type air conditioner 100 is designed so that alternative refrigerant R410a having high refrigerant capability per unit volume and small pressure loss is circulated therein.

The outdoor unit 1 is disposed outdoors. In the outdoor unit 1 are mounted an engine 10 for combusting fuel gas or the like to generate driving force, a compressor 11 connected through a driving force transmitting unit (not shown) to the engine 10 to compress and discharge the alternative refrigerant R410a, a four-way valve 12 for inverting the circulation direction of the refrigerant, an outdoor heat exchanger 13 for carrying out the heat exchange between the refrigerant and the outside air, an outdoor expansion valve 14 for reducing the pressure of the refrigerant, and an accumulator for carrying out gas-liquid separation of the refrigerant to be sucked into the compressor 11, these elements being connected to one another through the refrigerant pipe. Furthermore, an outdoor fan 16 for blowing air to the outdoor heat exchanger 13 is disposed in proximity to the outdoor heat exchanger 13.

In the outdoor unit 1, a bypass pipe 17 is connected between a refrigerant high-pressure side (the discharge side of the compressor 11) and a refrigerant low-pressure side (the entrance side of the accumulator 15 in Fig. 1), and a bypass valve (electrically-operated valve) 18 is provided in the bypass pipe 17. By adjusting the opening degree of the bypass valve 18, a part of the refrigerant discharged from the compressor 11 through the bypass pipe 17 to the suction side of the compressor 11 to thereby adjust the circulation amount of the refrigerant circulated between the outdoor unit 1 and the indoor units 2a, 2b. For example, when the engine 10 falls into an overload state, the bypass valve 18 is opened to reduce the compression ratio of the compressor 11, and thus the load of the engine 10 can be reduced. A pressure sensor (not shown) is provided to each of the refrigerant high pressure side and the refrigerant low pressure side, and the pressure values of the refrigerant at both the entrance and exit sides of the bypass valve 18 are detected by these pressure sensors.

Furthermore, the outdoor unit 1 is provided with a liquid pipe 40 for suitably supplying liquid refrigerant flowing through a pipe (liquid pipe) 19 at the outdoor unit 1 side to the entrance side of the accumulator 15 provided at the suction side of the compressor 11, and a liquid valve (electrically operated valve) 41 is provided in the liquid pipe 40. The liquid valve 4 is normally closed, however, when the temperature of the refrigerant discharged from the compressor 11 exceeds a predetermined temperature (this temperature is varied in accordance with the type of the refrigerant, however, it is set to 115°C or the like), the liquid valve 41 is opened to supply the low-temperature liquid refrigerant from the pipe 19 at the outdoor unit 1 side to the entrance side of the accumulator 15, whereby the temperature of the gas refrigerant sucked into the compressor 11 is lowered and the overheat of the refrigerant discharged from the compressor 11 can be prevented.

The indoor unit 2a, 2b is equipped with an indoor heat exchanger 20a, 20b for carrying out the heat exchange between the refrigerant and indoor air in a room in which the indoor unit 2a, 2b is secured, and an indoor expansion valve 21a, 21b for controlling the refrigerant amount of the refrigerant flowing into the indoor unit 2a, 2b, the indoor heat exchangers 20a, 20b and the indoor expansion valves 21a, 21b being connected to one another through the refrigerant pipe. Furthermore, an indoor fan 22a, 22b for blowing air to the indoor heat exchanger 20a, 20 is disposed in proximity to the indoor heat exchanger 20a, 20b.

Furthermore, air-fuel mixture is supplied from an engine fuel supply device 31 into the combustion chamber of the engine 10 for driving the compressor 11. The engine fuel supply device 31 includes fuel cutoff valves 33, a zero governor 34, a fuel adjusting valve 35 and a throttle valve 36 which are successively disposed in a fuel supply pipe 32 in this order, and the throttle valve 36 is connected to the combustion chamber of the engine 10. The fuel cutoff valves 33 constitute a close type fuel cutoff valve mechanism, and one of the cutoff of the fuel gas with no leakage and the intercommunication of the fuel gas is selectively performed by fully closing or opening the fuel cutoff valves 33.

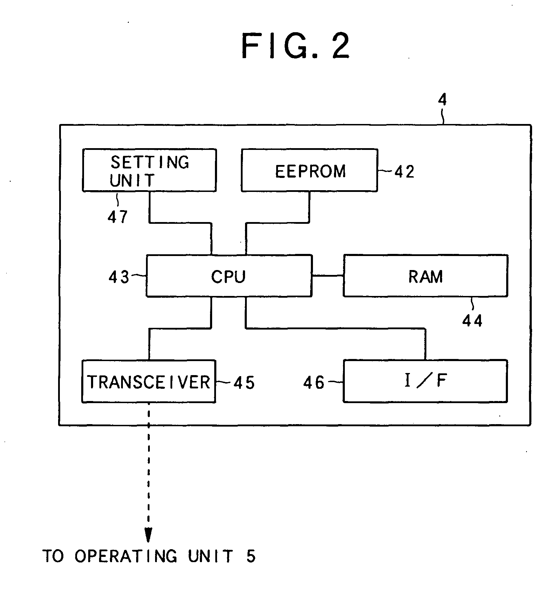

Fig. 2 is a block diagram showing the construction of a control device 4. The control device 4 is equipped with a setting unit 47 for setting a driving instruction, etc. to the engine 10 and the compressor 11, EEPROM (storage unit) 42 for storing various kinds of setting data of the engine driving type air conditioner 100, control programs and control data, etc., CPU 43 for controlling the whole of the engine driving type air conditioner 100 on the basis of the control programs, etc. stored in EEPROM 42, RAM 44 for temporarily storing various kinds of data, a transceiver 45 for making communications with the operating unit 5, and an interface (I/F) 46 for transmitting/receiving signals to/from the respective units of the engine driving type air conditioner 100.

The control device 4 is further connected through the I/F 46 to a rotational number detector (not shown) for detecting the rotational number of the engine 10, and temperature sensors (an indoor temperature sensor for measuring the indoor temperature (not shown), temperature sensors for measuring the refrigerant temperature at the inlet/outlet ports of each of the heat exchangers 13, 20a, 20b (not shown), and temperature sensors 23a, 23b for measuring the air blow-out temperature of the indoor fans 22a, 22b of the indoor units 2a, 2b (not shown)), and it is designed so as to achieve the information on the rotational number of the engine and the temperature at each place. The control device 4 is connected to pressure sensors for detecting the pressure values of the refrigerant at the entrance and exit of the bypass valve 18, and the pressure difference ΔP between the entrance and exit sides of the bypass pipe 18 can be achieved by these sensors.

When the operating unit 5 is manipulated, the control device 4 controls each of the engine 10, the four-way valve 12, the outdoor expansion valve 14 and the outdoor fan 16 of the outdoor unit 1 and the indoor expansion valves 21a, 21b and the indoor fans 22a, 22b of the indoor units 2a, 2b.

Specifically, the control device 4 switches the four-way valve 12 to set the air conditioner 1 to cooling operation or heating operation. That is, when the four-way valve 12 is switched to the cooling side, the refrigerant flows as indicated by a broken-line arrow, the outdoor heat exchanger 13 functions as a condenser and the indoor heat exchangers 20a, 20b function as evaporators, so that the operation state of the air conditioner is set to a cooling operation state and each of the indoor heat exchangers 20a, 20b cools a room. When the control device 4 switches the four-way valve 12 to the heating side, the refrigerant flows as indicated by a solid-line arrow, the indoor heat exchangers 20a, 20b function as condensers and the outdoor heat exchanger 13 functions as an evaporator, so that the operation state of the air conditioner is set to a heating operation state and each of the indoor heat exchangers heats a room.

Furthermore, the control device 4 controls the opening degrees of the fuel adjusting valve 35 and throttle valve 36 (the fuel adjusting valve opening degree, the throttle opening degree) on the basis of the difference between the set temperature set by the operating unit 5 and the indoor temperature achieved from the indoor temperature sensor, etc. to variably control the rotational number of the engine 10, and also controls the opening degree of the bypass valve. In addition, it controls the opening degrees of the outdoor expansion valve 14 and indoor expansion valves 21a, 21b on the basis of the refrigerant temperature difference between the refrigerant inlet/outlet ports of the heat exchangers 13, 20a, 20b.

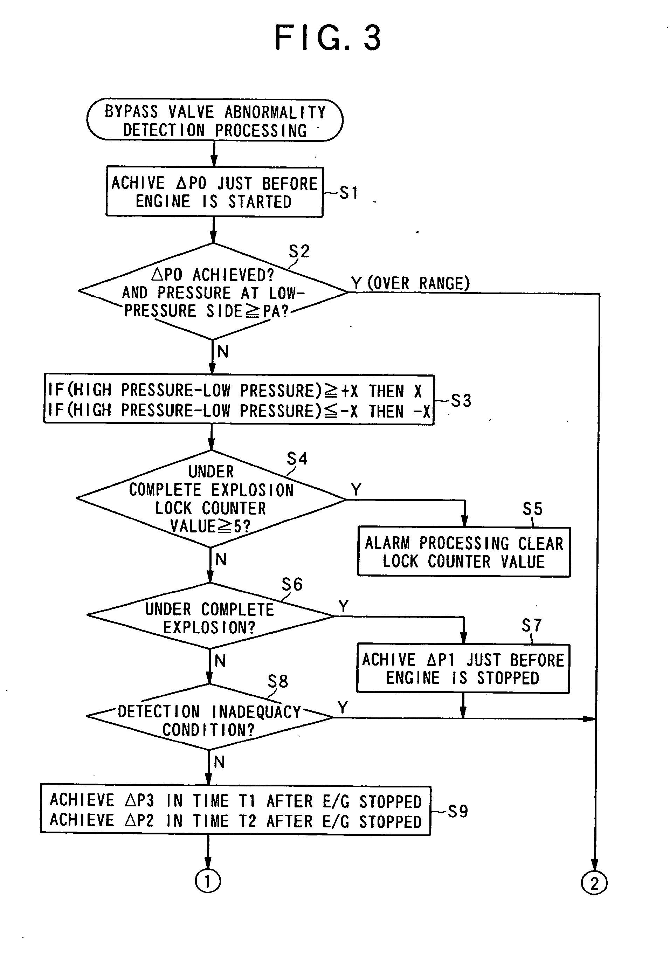

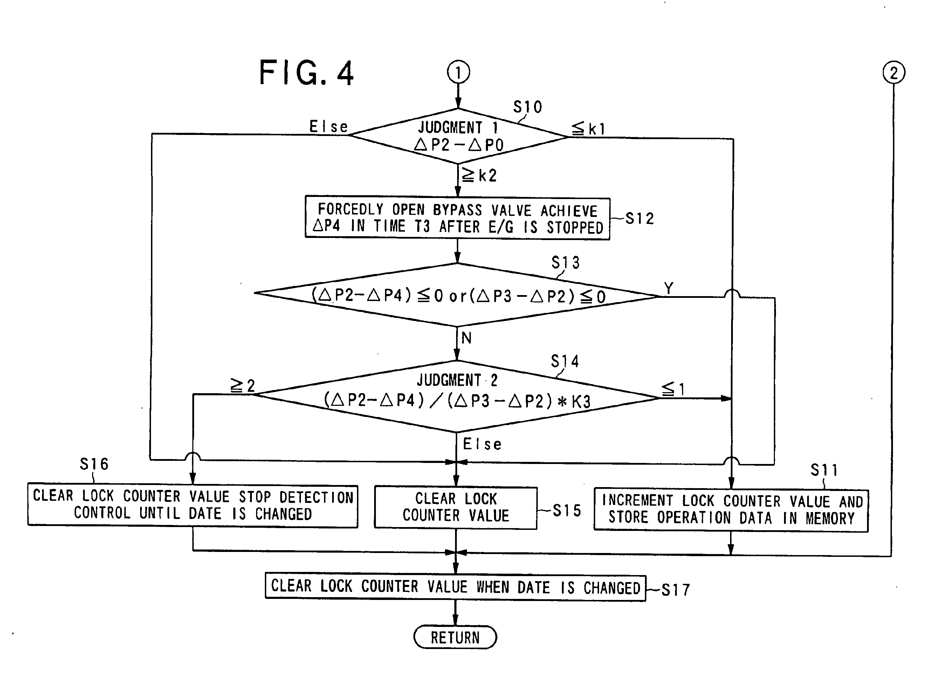

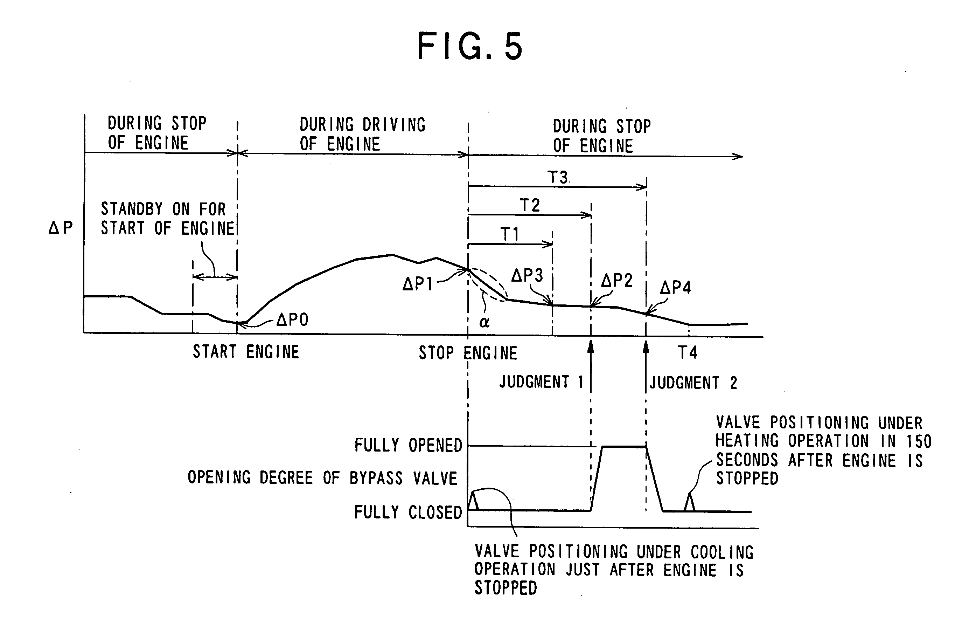

Furthermore, the control device 4 carries out bypass valve abnormality detection processing of detecting whether the bypass valve 18 is locked or not. Figs. 3 and 4 are flowcharts showing the bypass valve abnormality detection processing, and Fig. 5 is a diagram showing the variation characteristic of the pressure difference ΔP between the entrance and exit sides of the bypass valve 18 and the opening degree of the bypass valve 18 in the same time sequence.

First, before the engine 10 is started, the control device 4 detects the pressure values at both the entrance and exit sides of the bypass valve 18 by the pressure sensors, and achieves the pressure difference ΔP between the entrance and exit sides of the bypass valve 18 when the engine 10 is started (step S1). Subsequently, in order to judge whether this engine driving type air conditioner 100 is one of some types of air conditioners (for example, old types or the like) in which the pressure sensor for detecting the pressure at the low pressure side (the entrance side of the accumulator 15) is over range and thus it is impossible to detect abnormality of the bypass valve 18 with high precision even when the bypass valve abnormality detection processing is carried out, the control device 4 judges whether the pressure at the low pressure side achieved when the pressure difference ΔP is achieved is not less than a predetermined pressure PA (step S2). If the judgment of the step S2 is positive (step S2: Y (over range)), the control device 4 shifts to step S17 to cancel the bypass valve abnormality detection processing.

On the other hand, if the judgment of the step S2 is negative (step S2 : N), the control device 4 carries out error correction on the pressure sensor (step S3). Specifically, it is expected that the pressure values at the entrance and exit sides of the bypass valve 18 are substantially equal to each other before the engine 10 is started, and thus the pressure difference ΔP is substantially equal to zero. Therefore, when the pressure difference ΔP0 achieved is equal to or more than a positive value +X near to zero (for example, 0.05), that is, the measurement value is shifted to a positive side, the control device 4 sets the pressure difference ΔP0 to +X. On the other hand, when the pressure difference ΔP0 achieved is equal to or less than a negative value-X near to zero (for example, -0.05), that is, the measurement value is shifted to a negative side, the control device 4 sets the pressure difference ΔP0 to -X.

Subsequently, the control device 4 shifts to an engine driving state (during complete explosion). It checks a lock counter value which wouldbe counted up in the processing described later if there is any doubt that the bypass valve 18 is locked, and judges whether the lock counter value is equal to a predetermined number (5 in the example of the figure) or more (step S4). This lock counter value is stored in a predetermined area of RAM 44. Here, if the lock counter value is equal to 5 or more (step S4: Y), the control device 4 carries out alarm processing of alarming that there is some abnormality in the bypass valve 18, and then clears the lock counter value to zero (step S5). For example, this alarm processing is carries out by displaying a predetermined error code on a display panel of the operating unit 5 or emitting a predetermined warning sound with a sound emitting unit such as a buzzer or the like.

On the other hand, if the counter value is less than 5 (step S4: N), the control device 4 judges whether the engine 10 is under driving (under complete explosion) (step S6). If the engine 10 is under complete explosion (step S6: Y), upon input of an engine stop instruction from the operating unit, the control device 4 achieves the pressure difference ΔP1 at both the entrance and exit sides of the bypass valve 18 (Fig. 4) just before the engine is stopped (step S7), and then stops the engine 10.

When the engine 10 is stopped, the control device 4 judges whether the present situation corresponds to a condition inadequate to the detection of abnormality of the bypass vale 18 (detection inadequacy condition described later) (step S8). When the detection inadequacy condition is judged as being satisfied, the control device 4 shifts to step S17 to cancel the bypass valve abnormality detection processing. Here, when the engine 10 is stopped, the control device 4 controls the bypass valve 18 so that the bypass valve 18 is kept to the close state (for example, the opening degree of the bypass valve 18 is set to 20 steps).

As the detection inadequacy condition may be used a condition that the pressure values at both the entrance and exit sides of the bypass valve 18 is estimated to reach pressure equalization to each other more early than normally expected, etc. Specifically, this embodiment adopts, as the detection inadequacy condition, (1) the bypass valve 18 is kept opened by about a half or more (for example, the opening degree of the bypass valve 18 > 200 steps), (2) there is little difference between the pressure difference ΔP1 and the pressure difference ΔP0 (for example, ΔP1 ≤ ΔP0 + k0 (K0 represents a predetermined value)) , (3) the liquid valve 41 is kept opened by about a half or more (for example, the opening degree of the liquid valve 41 ≥ 200 steps), (4) the maximum opening degree of the indoor expansion valve 21a, 21b is large during cooling operation (for example, the opening degree of the indoor expansion valve ≥ 300 steps), (5) The maximum opening degree of the outdoor expansion valve 14 is large during heating operation (for example, the opening degree of the outdoor expansion valve ≥ 300 steps), (6) while the double speed is set, (7) while suction pipe oil is withdrawn, etc. The control device 7 monitors it at all times whether the conditions (6) and (7) are satisfied, and the control device 4 stops the bypass valve abnormality detection processing if any one condition (6), (7) is satisfied.

If any one of the above detection inadequacy conditions is satisfied (step S8 : Y), the control device 4 shifts to step S17 to cancel the bypass valve abnormality detection processing. On the other hand, if any one of the detection inadequacy conditions is not satisfied (step S8: N), the control device 4 achieves information on the pressure difference ΔP3 of the refrigerant in the bypass pipe 17 at the time point when a predetermined time T1 has elapsed from the stop of the engine and the pressure difference ΔP2 of the refrigerant in the bypass pipe 17 at the time point when a predetermined time T2 (T2 > T1) has elapsed (step S9).

Here, after the engine 10 is stopped and also the bypass valve 18 is controlled to be closed, the pressure values at the entrance and exit sides of the bypass valve 18 are gradually equal to each other, and thus the pressure difference ΔP at both the entrance and exit sides of the bypass valve 18 gradually approaches to zero as shown in Fig. 5. The times T1 and T2 are set so that these times T1 and T2 have elapsed before the pressure equalization is completed and also they avoid a peculiar area (indicated by α in Fig. 5) in which the pressure difference ΔP of the bypass pipe 17 is rapidly varied just after the engine is stopped.

Subsequently, the control device 4 subtracts the pressure difference ΔP0 from the pressure difference ΔP2, and judges an open-lock judgment (judgment 1) of the bypass valve 18 on the basis of the subtraction value (step S10). Specifically, when the subtraction value is equal to or less than the lower limit value K1 of the difference between the pressure difference ΔP2 and the pressure difference ΔP0 existing when the bypass valve 18 is normal (step S10: ≤ K1), it is judged that the bypass valve 18 may be under non-closed state, that is, it may be open-locked with high probability. Therefore, the control device 4 increments the lock counter value by only 1, and stores the operation data (for example, the measurement values of the respective sensors such as the pressure differences P0 to P3, etc.) as abnormality record information in EEPROM 42 (step S11). The abnormality record information (operation data) stored in EEPROM 42 is displayed on the display panel of the operating unit 5 by the control device 4 in response to the operation of the operating unit 5 or the like. Accordingly, users can be provided with information available to specify an abnormality place or the like.

As described above, the pressure difference ΔP2 at a predetermined time point until the pressure values at the entrance and exit sides of the bypass valve 18 are equal to each other is achieved (pressure equalization is completed, and it is judged whether the difference between the pressure difference ΔP2 thus achieved and the pressure difference ΔP0 measured in advance when the pressure equalization is completed is within a predetermined range, whereby it can be detected with high precision whether the pressure equalizing speed is higher than a normal speed, that is, the bypass valve 18 is open-locked.

Furthermore, if the subtraction value is not less than a value K2 (K2 > K1) indicating a normal pressure equalization speed (step S10: ≥K2), it is judged that the bypass valve 18 is not open-locked (= normal), and thus the control device 4 shifts to detection processing of close-lock (steps S12 to S14) . When the subtraction value is equal to the value K1 or more and equal to the value K2 or less (step S10: Else), it is judged that the present situation is under such a state that a residual pressure difference is little and thus an error detection is liable to occur. Therefore, the control device 4 shifts to step S15 without carrying out the detection processing (steps S12 to S14) of the close-lock, and clears the lock counter value to zero.

When the detection processing of the close lock is carried out, the control device 4 first controls the bypass valve 18 from the close state (fully-closed state) to the open state (fully-opened state), and achieves a pressure difference ΔP4 at both the entrance and exit sides of the bypass valve 18 at the time point when a predetermined time T3 has elapsed from the stop of the engine (step S12) as shown in Fig. 5. Here, when the bypass valve 18 is normally switched to the open state, the pressure equalization speed of the pressure at both the entrance and exit sides of the bypass valve 18 is increased. Furthermore, with respect to the time T3, it is set to a time point before the pressure values at both the entrance and exit sides of the bypass valve 18 are substantially equal to each other (the point T4 shown in Fig. 5).

Subsequently, the control device 4 calculates the subtraction value achieved by subtracting the pressure difference ΔP4 from the pressure difference ΔP2 thus achieved and also the subtraction value achieved by subtracting the pressure difference ΔP2 from the pressure difference ΔP3, and judges whether these subtraction values are equal to zero or less (step S13). If both the subtraction values are not equal to zero or the like (step S13: N), a close-lock judgment (judgment 2) of the bypass valve 18 is carried out (step S14). If anyone of the subtraction values is equal to zero or less (step S13: Y), the control device 4 shifts to step S15 to clear the lock counter value to zero.

The close-lock judgment (judgment 2) of the bypass valve 18 is carried out by comparing the subtraction value between the pressure difference ΔP2 and the pressure difference ΔP4 and the subtraction value between the pressure difference ΔP3 and the pressure difference ΔP2 (step S14). In other words, the subtraction value achieved by subtracting the pressure difference ΔP4 from the pressure difference ΔP2 indicates the variation degree (inclination = pressure equalization speed) of the pressure difference of the bypass pipe 17 during the closing control of the bypass valve, and the subtraction value achieved by subtracting the pressure difference ΔP2 from the pressure difference ΔP3 indicates the variation degree (inclination = pressure equalization speed) of the pressure difference of the bypass pipe 17 during the opening control of the bypass valve. The control device 4 calculates the ratio Z of the variation degree.

Specifically, the control device 4 calculates the division value of the subtraction value between the pressure difference ΔP2 and the pressure difference ΔP4 and the subtraction value between the pressure difference ΔP3 and the pressure difference ΔP2, and multiplies the division value by a coefficient K3 to calculate a value Z. Here, the coefficient K3 represents a coefficient for matching the time among the variation degrees, and specifically, it is calculated from (T3-T2)/(T2-T1). Accordingly, the control device 4 calculates the value Z indicating the ratio between the pressure equalization speed under the bypass valve closing control and the pressure equalization speed under the bypass valve opening control.

Here, in general, when the bypass valve 18 is normal, the pressure equalization speed under the bypass valve opening control is twice or more as high as the pressure equalization speed under the bypass valve closing control. Therefore, in this embodiment, when the value Z is equal to 2 or more (step S14: Z≥2), the control device 4 judges that the bypass valve 18 is normal, and then shifts to step S16 to clear the lock counter value to zero. In addition, the control device 4 does not carry out the bypass valve abnormality detection processing until the date is changed.

On the other hand, if the value Z is not more than 1 (step S14: Z≤1), it indicates that the pressure equalization speed under the bypass valve closing control is higher than the pressure equalization speed under the bypass valve opening control, and thus it is judged that there is a doubt that the bypass valve 18 is close-locked, and thus the control device 4 shifts to step S11 . In step S11, the control device increments the lock counter value by only 1, and also stores the operation data at this time into EEPROM 42. Furthermore, in the case of 1 < Z <2 (step S14: Else), it is difficult to surely judge whether the bypass valve 18 is close-locked because the pressure equalization speed under the bypass valve closing control and the pressure equalization speed under the bypass valve opening control are substantially equal to each other. In this case, the control device 4 shifts to step S15 to clear the lock count value to zero.

After any one of the steps Sll, S15 and S16 is carried out, the control device 4 clears the lock counter value to zero when the date is changed (step S17) or keeps the lock counter value unchanged before the date is changed, and returns the processing to the processing of step S1. Accordingly, the control device 4 repetitively carries out the bypass valve abnormality detection processing, and increments the lock counter value every time it is judged through the judgment 1 and the judgment 2 whether there is a doubt that the bypass valve 18 is locked. At the time point when the count value exceeds a predetermined number (5 in this embodiment), the control device 4 carries out the alarm processing and alarms that there is abnormality in the bypass valve 18.

As described above, according to the engine driving type air conditioner 100 of this embodiment, when the engine 10 is stopped, the bypass valve 18 is controlled to be closed. The pressure difference Δ2 of the refrigerant between both the entrance and exit sides of the bypass valve 18 is achieved at a predetermined time point before the pressure values at both the entrance and exit sides of the bypass valve 18 are equal to each other, and by judging whether the pressure difference ΔP2 is within a normal range, it can be detected with high precision whether the bypass valve 18 is open-locked or not.

Furthermore, according to this embodiment, the bypass valve 18 is switched from the closing control to the opening control, the variation degree of the pressure difference ΔP at both the entrance and exit sides of the bypass valve 18 (the pressure difference ΔP3 - ΔP2) under the bypass valve closing control is compared with the variation degree of the pressure difference ΔP at both the entrance and exit sides of the bypass valve 18 (the pressure difference ΔP2 - ΔP40) under the bypass valve opening control, and it is judged whether the comparison result is within a normal range, whereby it can be detected with high precision whether the bypass valve 18 is close-locked or not.

The present invention is not limited to the above embodiment, and for example, the setting values and the pipe construction of the above embodiment may be changed without departing the subject matter of the present invention as defined by the appended claims. Furthermore, in the above embodiment, the abnormality (lock) of the bypass valve 18 is detected by using the information on the pressure difference between the entrance and exit sides of the bypass valve 18 or the variation degree of the pressure difference. However, the abnormality (lock) of the bypass valve 18 may be detected when the opening degree of the liquid valve 41 is equal to a predetermined opening value or less.

## Claims

1. An engine driving type air conditioner (100) including an outdoor unit (1) having a compressor (11) driven by an engine (10) and an indoor unit (2a, 2b) which are connected to each other through a refrigerant pipe (3), the outdoor unit having a bypass pipe (17) for returning a part of refrigerant discharged from the compressor to the suction side of the compressor and a bypass valve (18) provided in the bypass pipe, the air conditioner **characterized by** comprising a bypass valve abnormality detecting unit (4) controlling the bypass valve (18) so that the bypass valve is subjected to a valve opening/closing operation when the engine (10) is stopped, detecting the pressure difference of refrigerant between both the entrance and exit sides of the bypass valve (18) in a predetermined time after the bypass valve is subjected to the valve opening/closing operation, and judging on the basis of a detection result concerning the pressure difference whether the bypass valve (18) is locked or not.

2. The engine driving air conditioner according to claim 1, wherein the bypass valve abnormality detecting unit (4) controls the bypass valve (18) so that the bypass valve is closed when the engine is stopped, detecting the pressure difference of the refrigerant between both the entrance and exit sides of the bypass valve after a predetermined time elapses from the time when the bypass valve is closed, and judging whether the pressure difference concerned is within a predetermined range, thereby judging whether the bypass valve is open-locked or not.

3. The engine driving type air conditioner according to claim 2, wherein the bypass valve abnormality detecting unit (4) judges whether the bypass valve (18) is open-locked, on the basis of the difference of the pressure difference between both the entrance and exit sides of the bypass valve after the predetermined time elapses and the pressure difference between both the entrance and exit sides of the bypass valve which is detected in advance before the engine is driven.

4. The engine driving type air conditioner according to claim 1, wherein the bypass valve abnormality detecting unit (4) determines a first variation degree of the pressure difference between both the entrance and exit sides of the bypass valve (18) when the engine (10) is stopped and the bypass valve is closed, and a second variation degree of the pressure difference between both the entrance and exit sides of the bypass valve (18) when the bypass valve is opened again after the bypass valve is closed, compares the first and second variation degrees and judges on the basis of the comparison result whether the bypass valve (18) is close-locked or not.

5. The engine driving type air conditioner according to claim 1, further comprising an alarm unit for alarming the lock of the bypass valve (18) when the bypass valve abnormality detecting unit (4) detects the lock of the bypass valve.

6. The engine driving type air conditioner according to claim 1, further comprising a storage unit for storing operation data of the engine driving type air conditioner (100) when the bypass valve abnormality detecting unit (4) detects the lock of the bypass valve (18), and a display unit for displaying the operation data stored in the storage unit.

7. A method of controlling an engine driving type air conditioner according to claim 1 and including an outdoor unit (1) having a compressor (11) driven by an engine (10) and a indoor unit (2a, 2b) which are connected to each other through a refrigerant pipe (3), the outdoor unit having a bypass pipe (17) for returning a part of refrigerant discharged from the compressor to the suction side of the compressor and a bypass valve (18) provided in the bypass pipe, comprising the steps of:
controlling the bypass valve (18) so that the bypass valve is subjected to a valve opening/closing operation when the engine is stopped;
detecting the pressure difference of refrigerant between both the entrance and exit sides of the bypass valve in a predetermined time after the bypass valve is subjected to the valve opening/closing operation; and
judging on the basis of a detection result concerning the pressure difference whether the bypass valve is locked or not.

8. The method according to claim 7, wherein the controlling step comprises a step of closing the bypass valve (18) when the engine (10). is stopped, detecting the pressure difference of the refrigerant between both the entrance and exit sides of the bypass valve (18) after a predetermined time elapses from the time when the bypass valve is closed, and judging whether the pressure difference concerned is within a predetermined range, thereby judging whether the bypass valve is open-locked or not.

9. The method according to claim 8, wherein the judging step comprises a step of determining a first variation degree of the pressure difference between both the entrance and exit sides of the bypass valve (18) when the engine (10) is stopped and the bypass valve is closed, and a second variation degree of the pressure difference between both the entrance and exit sides of the bypass valve (18) when the bypass valve is opened again after the bypass valve is closed, comparing the first and second variation degrees and judging on the basis of the comparison result whether the bypass valve (18) is close-locked or not.

10. The method according to claim 7, further comprising a step of alarming the lock of the bypass valve (18) when the bypass valve abnormality detecting unit detects the lock of the bypass valve (18).

## Patentansprüche

1. Motorbetriebene Klimaanlage (100) mit einer Außeneinheit (1) mit einem Kompressor (11), der durch einen Motor (10) angetrieben wird, und einer Inneneinheit (2a, 2b), die miteinander über eine Kältemittelleitung (3) verbunden sind, wobei die Außeneinheit eine Nebenschlussleitung (17) hat, um einen Teil des am Kompressor ausgegebenen Kältemittels an die Ansaugseite des Kompressors zurückzuleiten, und einem Nebenschlussventil (18), das in der Nebenschlussleitung vorgesehen ist, **dadurch gekennzeichnet , dass** die Klimaanlage aufweist eine Steuerung des Nebenschlussventils (18) dergestalt, dass das Nebenschlussventil einem Ventil-Öffnen/Schließvorgang unterzogen wird, wenn der Motor (10) gestoppt ist, Detektieren der Druckdifferenz des Kältemittels zwischen der Eingangs- und der Ausgangsseite des Nebenschlussventils (18) in einer vorbestimmten Zeit nachdem das Nebenschlussventil dem Ventil-Öffnen/Schließvorgang unterzogen worden ist, und entscheidend auf der Basis eines Detektionsergebnisses bezüglich der Druckdifferenz, ob das Nebenschlussventil (18) verriegelt ist oder nicht.

2. Motorbetriebene Klimaanlage nach Anspruch 1, wobei die Nebenschlussventil-Anomaliedetektiereinheit (4) das Nebenschlussventil (18) so steuert, dass das Nebenschlussventil geschlossen ist, wenn der Motor gestoppt ist, und die Druckdifferenz des Kältemittels zwischen der Eingangs- und Ausgangsseite des Nebenschlussventils nach dem Ablauf einer vorbestimmten Zeit ausgehend von dem Zeitpunkt, zu welchem das Nebenschlussventil geschlossen ist, detektiert und entscheidet, ob die betroffene Druckdifferenz innerhalb eines vorbestimmten Bereiches liegt, um **dadurch** zu entscheiden, ob das Nebenschlussventil offen-verriegelt ist oder nicht.

3. Motorbetriebene Klimaanlage nach Anspruch 2, wobei die Nebenschlussventil-Anomaliedetektiereinheit (4) entscheidet, ob das Nebenschlussventil (18) offen-verriegelt ist, auf der Basis der Differenz der Druckdifferenz zwischen den Eingangs- und Ausgangsseiten des Nebenschlussventils nach dem Ablauf einer vorbestimmten Zeit und der Druckdifferenz zwischen den Eingangs- und Ausgangsseiten des Nebenschlussventils, die im Voraus, bevor der Motor angetrieben wird, detektiert worden ist.

4. Motorbetriebene Klimaanlage nach Anspruch 1, wobei die Nebenschlussventil-Anomaliedetektiereinheit (4) einen ersten Variationsgrad der Druckdifferenz zwischen den Eingangs- und Ausgangsseiten des Nebenschlussventils (18) bestimmt, wenn der Motor (10) gestoppt ist und das Nebenschlussventil geschlossen ist, und einen zweiten Variationsgrad der Druckdifferenz zwischen den Eingangs- und Ausgangsseiten des Nebenschlussventils (18), wenn das Nebenschlussventil nach dem Geschlossensein des Nebenschlussventils wieder geöffnet ist, bestimmt, die ersten und zweiten Variationsgrade vergleicht und auf der Basis des Vergleichsergebnisses entscheidet, ob das Nebenschlussventil (18) geschlossen-verriegelt ist oder nicht.

5. Motorbetriebene Klimaanlage nach Anspruch 1, weiterhin mit einer Alarmeinheit, um die Verriegelung des Nebenschlussventils (18) alarmierend anzuzeigen, wenn die Nebenschlussventil-Anomaliedetektiereinheit (4) die Verriegelung des Nebenschlussventils detektiert.

6. Motorbetriebene Klimaanlage nach Anspruch 1, weiterhin mit einer Speichereinheit zum Speichern der Betriebsdaten der motorbetriebenen Klimaanlage (100), wenn die Nebenschlussventil-Anomaliedetektiereinheit (4) die Verriegelung des Nebenschlussventils (18) detektiert, und einer Anzeigeeinheit zum Anzeigen der Betriebsdaten, die in der Speichereinheit gespeichert sind.

7. Verfahren zur Steuerung einer motorbetriebenen Klimaanlage nach Anspruch 1 und mit einer Außeneinheit (1), mit einem Kompressor (11), der durch einen Motor (10) angetrieben wird, und einer Inneneinheit (2a, 2b), die miteinander über eine Kältemittelleitung (3) verbunden sind, wobei die Außeneinheit eine Nebenschlussleitung (17) hat, um einen Teil des am Kompressor ausgegebenen Kältemittels zur Ansaugseite des Kompressors zurückzuleiten, und ein Nebenschlussventil (18) hat, das in der Nebenschlussleitung vorgesehen ist, mit den Schritten:
Steuern des Nebenschlussventils (18) dergestalt, dass das Nebenschlussventil einem Ventilöffnungs-Schließ-Vorgang unterzogen wird, wenn der Motor gestoppt ist;
Detektieren der Druckdifferenz des Kältemittels zwischen den Eingangs- und Ausgangsseiten des Nebenschlussventils in einer vorbestimmten Zeit nachdem das Nebenschlussventil dem Ventilöffnungs-Schließ-Vorgang unterzogen worden ist; und
Entscheiden auf der Basis des Detektionsergebnisses bezüglich der Druckdifferenz, ob das Nebenschlussventil verriegelt ist oder nicht.

8. Verfahren nach Anspruch 7, wobei der Steuerungsschritt aufweist, einen Schritt Schließen des Nebenschlussventils (18), wenn der Motor (10) gestoppt ist, Detektieren der Druckdifferenz des Kältemittels zwischen den Eingangs- und Ausgangsseiten des Nebenschlussventils (18) nachdem zum Zeitpunkt, zu welchem das Nebenschlussventil geschlossen ist, eine vorbestimmte Zeit abgelaufen ist, und Entscheiden, ob die betroffene Druckdifferenz innerhalb eines vorbestimmten Bereiches ist, wodurch entschieden wird, ob das Nebenschlussventil offen-verriegelt ist oder nicht.

9. Verfahren nach Anspruch 8, wobei der Entscheidungsschritt einen Schritt Bestimmen eines ersten Variationsgrades der Druckdifferenz zwischen den Eingangs- und Ausgangsseiten des Nebenschlussventils (18), wenn der Motor (10) gestoppt ist und das Nebenschlussventil geschlossen ist, und eines zweiten Variationsgrades des Druckunterschiedes zwischen den Eingangs- und Ausgangsseiten des Nebenschlussventils (18), wenn das Nebenschlussventil nachdem das Nebenschlussventil geschlossen ist, wieder geöffnet ist, aufweist, Vergleichen der ersten und zweiten Variationsgrade und Entscheiden auf der Basis des Vergleichsergebnisses, ob das Nebenschlussventil (18) geschlossen-verriegelt ist oder nicht.

10. Verfahren nach Anspruch 7, weiterhin mit einem Schritt Alarmmelden der Verriegelung des Nebenschlussventils (18), wenn die Nebenschlussventil-Anomaliedetektiereinheit die Verriegelung des Nebenschlussventils (18) detektiert.

## Revendications

1. Climatiseur du type à entraînement par moteur (100) comprenant une unité extérieure (1) possédant un compresseur (11) entraîné par un moteur (10) et une unité intérieure (2a, 2b) qui sont reliées l'une à l'autre par l'intermédiaire d'une conduite de fluide frigorigène (3), l'unité extérieure possédant une conduite de dérivation (17) pour renvoyer une partie du fluide frigorigène évacué du compresseur vers le côté aspiration du compresseur et une soupape de dérivation (18) située dans la conduite de dérivation, le climatiseur étant **caractérisé par le fait qu'**il comprend une unité de détection des anomalies (4) de la soupape de dérivation commandant la soupape de dérivation (18) de sorte que la soupape de dérivation est soumise à une opération d'ouverture/fermeture de la soupape lorsque le moteur (10) est arrêté, détectant la différence de pression du fluide frigorigène entre à la fois les côtés entrée et sortie de la soupape de dérivation (18) à un moment prédéterminé après que la soupape de dérivation est soumise à l'opération d'ouverture/fermeture de la soupape, et jugeant sur la base d'un résultat de détection concernant la différence de pression si la soupape de dérivation (18) est verrouillée ou non.

2. Climatiseur du type à entraînement par moteur selon la revendication 1, dans lequel l'unité de détection des anomalies (4) de la soupape de dérivation commande la soupape de dérivation (18) de sorte que la soupape de dérivation est fermée lorsque le moteur est arrêté, détectant la différence de pression du fluide frigorigène entre à la fois les côtés entrée et sortie de la soupape de dérivation après un temps prédéterminé à partir du moment où la soupape de dérivation est fermée, et jugeant si la différence de pression concernée se trouve dans une plage prédéterminée, jugeant ainsi si la soupape de dérivation est verrouillée ouverte ou non.

3. Climatiseur du type à entraînement par moteur selon la revendication 2, dans lequel l'unité de détection des anomalies (4) de la soupape de dérivation juge si la soupape de dérivation (18) est verrouillée ouverte, sur la base de la différence de pression entre à la fois les côtés entrée et sortie de la soupape de dérivation après le temps prédéterminé, et de la différence de pression entre à la fois les côtés entrée et sortie de la soupape de dérivation qui est détectée par avance avant que le moteur ne soit entraîné.

4. Climatiseur du type à entraînement par moteur selon la revendication 1, dans lequel l'unité de détection des anomalies (4) de la soupape de dérivation détermine un premier degré de variation de la différence de pression entre à la fois les côtés entrée et sortie de la soupape de dérivation (18) lorsque le moteur (10) est arrêté et la soupape de dérivation est fermée, et un second degré de variation de la différence de pression entre à la fois les côtés entrée et sortie de la soupape de dérivation (18) lorsque la soupape de dérivation est ré-ouverte après la fermeture de la soupape de dérivation, compare les premier et second degrés de variation et juge sur la base des résultats de la comparaison si la soupape de dérivation (18) est verrouillée fermée ou non.

5. Climatiseur du type à entraînement par moteur selon la revendication 1, comprenant en outre une unité d'alarme pour prévenir le verrou de la soupape de dérivation (18) quand l'unité de détection des anomalies (4) de la soupape de dérivation détecte le verrouillage de la soupape de dérivation.

6. Climatiseur du type à entraînement par moteur selon la revendication 1, comprenant en outre une unité de stockage pour stocker des données de fonctionnement du climatiseur du type à entraînement par moteur (100) lorsque l'unité de détection des anomalies (4) de la soupape de dérivation détecte le verrouillage de la soupape de dérivation (18), et une unité d'affichage pour afficher les données de fonctionnement stockées dans l'unité de stockage.

7. Procédé pour commander un climatiseur du type à entraînement par moteur selon la revendication 1 et comprenant une unité extérieure (1) possédant un compresseur (11) entraîné par un moteur (10) et une unité intérieure (2a, 2b) qui sont reliées l'une à l'autre par l'intermédiaire d'une conduite de fluide frigorigène (3), l'unité extérieure possédant une soupape de dérivation (17) pour renvoyer une partie du fluide frigorigène évacué du compresseur vers le côté aspiration du compresseur et une soupape de dérivation (18) située dans la conduite de dérivation, comprenant les étapes consistant à :
commander la soupape de dérivation (18) de sorte que la soupape de dérivation est soumise à une opération d'ouverture/fermeture de la soupape lorsque le moteur est arrêté ;
détecter la différence de pression du fluide frigorigène entre à la fois les côtés entrée et sortie de la soupape de dérivation dans un temps prédéterminé après que la soupape de dérivation est soumise à l'opération d'ouverture/fermeture de la soupape ; et
juger sur la base d'un résultat de détection concernant la différence de pression si la soupape de dérivation est verrouillée ou non.

8. Procédé selon la revendication 7, dans lequel l'étape consistant à commander comprend une étape consistant à fermer la soupape de dérivation (18) quand le moteur (10) est arrêté, à détecter la différence de pression du fluide frigorigène à la fois entre les côtés entrée et sortie de la soupape de dérivation (18) après un temps prédéterminé à partir du moment où la soupape de dérivation est fermée, et à juger si la différence de pression concernée se situe dans une plage prédéterminée, jugeant ainsi si la soupape de dérivation est verrouillée ouverte ou non.

9. Procédé selon la revendication 8, dans lequel l'étape consistant à juger comprend une étape consistant à déterminer un premier degré de variation de la différence de pression entre à la fois les côtés entrée et sortie de la soupape de dérivation (18) lorsque le moteur (10) est arrêté et la soupape de dérivation est fermée, et un second degré de variation de la différence de pression entre à la fois les côtés entrée et sortie de la soupape de dérivation (18) lorsque la soupape de dérivation est ré-ouverte après la fermeture de la soupape de dérivation, à comparer les premier et second degrés de variations et à juger sur la base du résultat de la comparaison si la soupape de dérivation (18) est verrouillée fermée ou non.

10. Procédé selon la revendication 7, comprenant en outre une étape consistant à avertir le verrou de la soupape de dérivation (18) quand l'unité de détection des anormalités de la soupape de dérivation détecte le verrouillage de la soupape de dérivation (18).
